# EUROPÄISCHE PATENTSCHRIFT

(11) **EP 1 517 736 B1**
(45) Veröffentlichungstag und Bekanntmachung des Hinweises auf die Patenterteilung: **27.09.2006**
(21) Anmeldenummer: 03761512.7
(22) Anmeldetag: 26.06.2003
(51) Int. Cl.: B01D 39/16, B01D 39/18

(54) **FILTERMATERIAL, INSBESONDERE IN FORM EINER TIEFENFILTERSCHICHT**
FILTER MATERIAL, ESPECIALLY IN THE FORM OF A DEEP-BED FILTER LAYER
MATERIAU FILTRANT SE PRESENTANT NOTAMMENT SOUS FORME DE COUCHE FILTRE A LIT PROFOND

(30) Priorität: 29.06.2002 DE 10229291
(43) Veröffentlichungstag der Anmeldung: 30.03.2005
(73) Patentinhaber: E. Begerow GmbH & Co., D-55450 Langenlonsheim (DE)
(72) Erfinder: AMTMANN, Till, 55559 Bretzenheim (DE); BRANDT, Sigrid, 55595 Traisen (DE); GEIGER, Günther, 76684 Östringen (DE)
(74) Vertreter: Bartels, Martin Erich Arthur
(86) Internationale Anmeldenummer: PCT/EP2003/006737
(87) Internationale Veröffentlichungsnummer: WO 2004/002606

(56) Entgegenhaltungen:
- DE-A- 3 204 120
- DE-A- 10 044 218
- US-B1- 6 267 252
- US-B1- 6 352 947

## Beschreibung

Die Erfindung betrifft ein Filtermaterial, insbesondere in Form einer Tiefenfilterschicht mit den Merkmalen des Oberbegriffes des Patentanspruches 1.

Im Stand der Technik sind Kieselgurstützschichten und Verfahren zu deren Herstellung bekannt. Zur Erhöhung der Nassfesteigenschaften und unter Vermeidung von Quelldehnungen bei der durch Anschwemmen von nativen Fasern und darauffolgendem Trocknen hergestellten und bei der Kieselgur-Anschwemmfiltration in Filterpressen Verwendung findenden Kieselgurstützschicht bestehen 20-50 Gewichts-%, bezogen auf die Gesamtfasermenge der Kieselgurstützschicht (trockengedacht), aus Polyolefinfasern mit einer Faserlänge von 0,8-1,2 mm. Zur Herstellung der Kieselgurstützschicht werden die Polyolefinfasern der wässrigen Lösung aus nativen Fasern zugegeben, die Suspension aus dem Fasergemisch auf ein Siebband angeschwemmt und entwässert und die Schicht mit der Sinterungstemperatur der Polyolefinfasern getrocknet. Hierdurch ergibt sich eine Kieselgurstützschicht, die unter Vermeidung von nach geltendem Lebensmittelrecht unzulässigen Bindemitteln, sowohl hervorragende Nassfesteigenschaften aufweist, als auch praktisch frei ist von Quelldehnungen. Trotz dieser Vorteile ist die Oberflächenanbindung der Polyolefinfasern an die Kieselgurstützschicht reduziert, was die Stabilität sowie die Festigkeit und die Homogenität des Gesamtfiltermaterials beeinträchtigt. Auch lassen sich gewünschte weitere Eigenschaften wie Erhöhung der Nassfestigkeit oder der chemischen Beständigkeit durch Einbringen von Zusatzmaterialien nur sehr eingeschränkt aufgrund des Grundstrukturaufbaues des bekannten Filtermaterials vornehmen.

Durch die DE 32 04 120 C2 ist eine poröse Stützschicht als Filtermaterial für einen durch Anschwemmen gebildeten Kieselgur-Filterkuchen bekannt, wobei native Fasern (Zellulose) und ein Verfestigungsmittel ein Fasergefüge bilden, dass gegenüber zu filtrierenden Medien nassfest ist. Vorzugsweise besteht dabei das bekannte Filtermaterial aus 20-50 Gewichts-% der Stützschicht bezogen auf das trockene Fasergefüge, aus Polyolefinfasern mit einer Faserlänge von 08,-1,2 mm (Kurzstapelfaser), die sowohl miteinander als auch mit den nativen Fasern zusammengesintert sind. Um das dahingehend bekannte Filtermaterial herzustellen, wird eine wässrige Suspension aus nativen Fasern (Zellulose) und einem Verfestigungsmittel auf einem Siebband angeschwemmt, zu einem schichtartigen Fasergefüge entwässert und das Fasergefüge anschließend einer Trocknung unterworfen, wobei bezogen auf das Trocknen des Fasergefüges 20-50 Gewichts-% Polyolefinfasern mit der genannten Faserlänge der wässrigen Suspension zugegeben werden. Anschließend werden die Polyolefinfasern bei der Trocknung sowohl miteinander als auch mit den nativen Fasern gesintert, wobei die Trocknung mit einer Temperaturführung erfolgt, die die morphologische Struktur der Polyolefinfasern erhält.

Da bei der bekannten Lösung die eingesetzten Polyolefinfasern einen sehr niederen Schmelzpunkt aufweisen, ist während des Trockungs- und Sinterverfahrens ein Durchschmelzen der Fasern möglich, so dass nicht an jeder Verbindungsstelle mit den nativen oder sonstigen Polyolefinfasern ein sicherer fester Verbund erreichbar ist. Die fehlenden Bindungsstellen reduzieren dann jedoch die Stabilität sowie die Festigkeit und Homogenität des bekannten Filtermaterials, was zum einen das Filtrationsergebnis beeinträchtigt und zum andern die Standzeit einer Gesamtfiltervorrichtung bis zum Austausch gegen neues Filtermaterial entsprechend reduziert. Um dem dahingehenden Problem Herr zu werden, ist bei der bekannten Lösung das Einbringen von Nassfestmitteln vorgesehen, um die Nassfestigkeit zu erhöhen, da die Nassfestigkeit durch die poröse Stützschicht selbst nicht voll gewährleistet werden kann. Das Einbringen von Nassfestmitteln ist bei der bekannten Lösung aber wiederum für bestimmte Filtrationsaufgaben nachteilig, und es kann zu Schrumpfungsvorgängen beim anschließenden Trocknen oder Sintern kommen, wobei der Schrumpfungsgrad sich nur schwer vorhersehen läßt, mit der Folge, daß eine technisch exakte Vorgabe der Filtrationseigenschaften nicht möglich ist.

Durch die DE 100 44 218 A1 ist ein nassfest ausgerüsteter Filter, insbesondere ein Tiefenfilter mit hoher Quellfähigkeit beschrieben, der eine Cellulosefasern als native Fasern enthaltende, offenporige Hohlräume aufweisende Filtermatrix umfasst, wobei die Cellulosefasern an ihrer Oberfläche chemisch gebundenes Polyisocyanat aufweisen. Durch die Behandlung der Zellstofffasern der Filtermatrix mit dem Polyisocyanat wird die Quellfähigkeit des Filtermaterials verbessert, um dergestalt eine verbesserte Filterwirkung zu erreichen. Bei der bekannten Lösung werden die Polyisocyanate in Form von Emulsionen eingesetzt, üblicherweise in Form wasserdispergierbarer Polyisocyanate oder Gemische davon, die in einer Konzentration von bis zu 20 Gew-%, vorzugsweise bis zu 10 Gew.-% in Wasser feinteilige Dispersionen mit Partikelgrößen ≤ 500 nm aufweisen. Der bekannte Cellulosefilter wird zum großen Teil (30-100% des Zellstoffanteils, vorzugsweise > 50%) aus Langfasern mit einer Länge von > 2 mm, vorzugsweise 2-4 mm, insbesondere 2,5-4 mm und einem Faserdurchmesser von > 25 µm, vorzugsweise > 30 µm (im ungemahlenen Zustand) hergestellt. Die dahingehenden Langfasern zeigen eine langanhaltende Stabilität und werden im Verarbeitungsprozeß, vorzugsweise fibrillierend gemahlen, wobei zum Teil hohe Mahlgrade von bis zu 80°SR verwendet sind. In die bekannte Filtermatrix können zusätzliche Filterkomponenten eingebracht sein wie Polysaccharide, Cellulosederivate wie Celluloseacetat, Agarose und deren Derivate, Dextrane und Chitosane, sowie deren Derivate und insbesondere anorganische Partikel wie natürliche Silikatverbindungen beispielsweise in Form von Kieselgur, Schichtsilikate, Perlite, Xerogele, Feldspäte, Zeolite, Montmorillonite, Molekularsiebe und Ionenaustauscher, Aktivkohle, Titandioxid, Zinksulfid, Calciumkarbonat, Talkum sowie synthetische organische polymere Partikel, die insbesondere auch aus den zuvor genannten reaktiven Nassfestharzen bestehen können, Polyvinylpyrrolidon (PVP bzw. PVPP) sowie Stärke und Stärkederivate wie oxidierte und alkylierte Stärken und synthetische Faserstoffe wie beispielsweise Polyethylene, Polypropylene. Dabei können die bekannten Filtermaterialien bis zu 70 Gew.-% bezogen auf den Gesamtgehalt des Filters diese Filterkomponenten enthalten. Es wurde dabei angenommen, dass die bekannten Filterschichten eine bessere Filtrationsleistung aufweisen als andere mit handelsüblichen Nassfestharzen wie Polyamidamin Epichlorhydrin Harze, Melamin-Formaldehydharze ausgerüstete Filterschichten. Aufgrund des nativen Faseraufbaues mit Cellulosefasern kann es hier jedoch gleichfalls zu Schrumpfungsvorgängen beim anschließenden Trocknen oder Sintern kommen mit der Folge, dass trotz des verstärkten Quellverhaltens eine technisch exakte Vorgabe der Filtrationseigenschaften auch mit dieser bekannten Lösung nicht möglich ist.

Durch die DE 100 51 186 A1 ist eine poröse Stützschicht als Filtermaterial bekannt in Form eines Staubfilterbeutels. Der bekannte Staubfilterbeutel umfasst dabei eine Filtermateriallage und eine weitere Trägermateriallage, wobei die Trägermateriallage eine Luftdurchlässigkeit von mindestens 900 l/m² x s, eine Berstfestigkeit von mindestens 70 kPa, eine Bruchkraft in Längsrichtung von mehr als 10 N und in Querrichtung von mehr als 3 N aufweist, mit einer Biegesteifigkeit in Längsrichtung von mehr als 0,5 cN cm² und in Querrichtung von mehr als 0,25 cN cm². Der bekannte Staubfilterbeutel wird dabei durch die folgenden Schritte hergestellt:
- Mischen von Fasern, umfassend Zellstofffasern und schmelzbare Fasern (Bikomponentenfasern),
- Verarbeiten der Fasermischung im Nasslegeverfahren,
- Trocknen der erhaltenen Faserbahn,
- Verfestigung der getrockneten Faserbahn durch Thermofusion zu einer Trägermaterial lage,
- Verarbeitung der Trägermateriallage mit einer Filtermateriallage zu einem Rohbeutel,
- Konfektionierung des Rohbeutels zu einem Staubfilterbeutel.

Die für die bekannte Filtermateriallage eingesetzten Bikomponentenfasern sind Fasern, die aus zwei verschiedenen Polymeren zusammengesetzt sind, wobei die Polymere jeweils unterschiedliche Schmelzpunkte besitzen. Dies ermöglicht die Verarbeitung dieser Fasern dahingehend, dass das niedrigschmelzende Polymer schmilzt, während der Schmelzpunkt des höherschmelzenden Polymers nicht erreicht wird. Dahingehende Bikomponentenfasern können beispielsweise als Kern-Mantel-Fasern oder als side-byside-Fasern ausgebildet sein. Ferner können als Materialien für Bikomponentenfasern nahezu alle Polymere eingesetzt werden, wie beispielsweise Polypropylen und Polyethylen, Polypropylen und Polyester, Polypropylen und Copolyester sowie Polyester und Nylon 6. Mit der bekannten Staubfilterbeutellösung ist eine Filtermatrix realisiert, die eine hohe Gerätesaug- oder Blasleistung ermöglicht, die eine für die Verwendung in Staubsaugern ausreichende mechanische Stabilität aufweisen. Eine Verwendung des bekannten Filters für Fluide in der Nahrungs-, Getränkemittel- und pharmazeutischen Industrie ist nicht möglich, insbesondere lassen sich mit der bekannten Lösung keine Feinstabscheideverfahren durchführen, beispielsweise zum Abscheiden von Mikroorganismen oder Proteinen aus Fluiden.

Durch die US-B1-6 352 947 ist ein gattungsgemäßes Filtermaterial bekannt, bestehend aus einer Durchlässe bildenden Stützschicht mit nativen Fasern und Bikomponentenfasern, wobei im Filtermaterial als Nassfestmittel Melaminformaldehydharze enthalten sind. Das bekannte Filtermaterial erlaubt eine im wesentlichen schrumpffreie stabile Filtermatrix aufzubauen mit sicher ausgebildeten Verbindungsstellen ohne zusätzliche Netz- oder Bindemittel. Nachteilig ist jedoch, dass mit der bekannten Lösung keine konstanten Filtrationseigenschaften dergestalt erreichbar sind, dass man im Sinne einer weitgehenden Standardisierung für bestimmte Filtrationsaufgaben definierte Filtermaterialien einsetzen kann, um dergestalt auch Feinstabscheideprozesse bei Fluiden zu ermöglichen mit der Möglichkeit, Kleinstteile, wie Mikroorganismen oder Proteine, aus Fluidlösungen abtrennen zu können.

Ausgehend von diesem Stand der Technik liegt der Erfindung die Aufgabe zugrunde, die bekannten Filtermittel und Filtermaterialien unter Beibehalten ihrer Vorteile dahingehend weiter zu verbessern, dass konstante Filtrationseigenschaften erreichbar sind, die Feinstabscheideprozesse bei Fluiden ermöglichen, um dergestalt Kleinstteile, wie Mikroorganismen oder Proteine, aus Fluidlösungen abtrennen zu können.

Eine dahingehende Aufgabe löst ein Filtermaterial mit den Merkmalen des Patentanspruches 1 in seiner Gesamtheit.

Dadurch, dass gemäß dem kennzeichnenden Teil des Patentanspruches 1 die erste Art an Fasern in der Art einer Stapelfaser ausgebildet ist mit vorgebbaren Längen von 3, 4, 6 und 12 mm, lassen sich je nach Wahl der Stapelfaser und der Stapelfaserlänge konstante Filtrationseigenschaften für das jeweils für eine spezielle Filtrationsaufgabe einzusetzende Filtermaterial erreichen. In Abhängigkeit der vorliegenden Filtrationsaufgabe lassen sich dann durch die gezielte Wahl der Stapelfasern und deren standardisierten Längen die Filtrationseigenschaften konstant halten, wobei dabei auch Feinstabscheideprozesse bei Fluiden ermöglicht sind, um dergestalt Kleinstteile, wie Mikroorganismen oder Proteine, aus Fluidlösungen abtrennen zu können.

Bei dem erfindungsgemäßen Filtermaterial ist die erste Art an Kunststoff-Fasern als Bikomponentenfasern ausgebildet, wobei die Faseranteile (Mantel) mit niedrigen Schmelzpunkt dazu dienen, die Verbindungsstellen miteinander und mit den nativen Fasern (Cellulosefasern) auszubilden und die Faseranteile (Kern) mit dem hohen Schmelzpunkt stellen sicher, dass diese auch bei Trocknungs- und Sinterprozessen des Filtermaterials bei entsprechend hohen Temperaturen unbeschädigt bleiben und derart die Filtermatrix ausbilden, ohne dass es ungewollt zu Schrumpfvorgängen kommt, und ohne dass zusätzliche Netz- oder Bindemittel einzubringen wären.

Vielmehr gewährleisten die Kunststoff-Fasern aus Faseranteilen mit hohem Schmelzpunkt die strukturelle hohe Festigkeit des erfindungsgemäßen Filtermaterials bei konstanten Filtrationseigenschaften auch unter hohen Drükken und die Faseranteile mit dem niedrigen Schmelzpunkt stellen mit die Verbindungsmatrix für das Filtermaterial sicher, auch wenn gegebenenfalls aufgrund einer gewissen Temperaturvarianz bei Vorgabe des Trocknungs- und/oder Sinterungsprozesses durch wegschmelzendes Material eine Verbindungsstelle versagt, die dann entsprechend noch über das Fasermaterial mit dem hohen Schmelzpunkt herstellbar ist.

Aufgrund der hohen strukturellen Festigkeit und der Konstanz der Filtrationseigenschaften ist das Filtermaterial auch gegenüber Durchnässung weitgehend geschützt. Dergestalt ist auch die Langlebigkeit und mithin die Standzeit der Gesamtfiltereinrichtung gewährleistet.

Das erfindungsgemäße Filtermaterial findet Anwendung in sogenannten Tiefenfiltern, die es erlauben, die Verunreinigungen hauptsächlich im Inneren (Tiefe) des filternden Materials abzuscheiden. Sofern der Tiefenfilter in der Art einer bandartigen Filter- oder Trägerschicht ausgebildet ist, ist er besonders geeignet für die Fluidfiltration in der chemisch-pharmazeutischen sowie der Getränke-Industrie.

Durch den Einsatz von Nassfestmitteln ist zum einen deutlich die Nassfestigkeit für das erfindungsgemäße Filtermaterial erhöht und durch den Einsatz von speziellen Nassfestmitteln aus der Gruppe der Epichlorhydrin-Harze und/oder der Melaminformaldehyd-Harze läßt sich das sogenannte Zetapotential einstellen so dass es möglich ist in Abhängigkeit des Aufbaues des jeweils eingesetzten Nassfestmittels das anionische oder kationische Potential für das gesamte Filtermaterial vorzugeben. Aufgrund dieser Einstellmöglichkeit ist es dann aber möglich, das erfindungsgemäße Filtermaterial für Abscheidevorgänge in Sonderbereichen einzusetzen, bei denen kleinste Komponenten wie Mikroorganismen oder Proteine aus einem Fluidstrom abzutrennen sind. Ferner läßt sich das derartige aufgebaute erfindungsgemäße Filtermaterial für die Blutplasma-Fraktionierung einsetzen.

Im Folgenden wird das erfindungsgemäße Filtermaterial anhand einer Ausführungsform sowie anhand von Rezepturbeispielen näher erläutert.

Die in dem Filtermaterial zum Einsatz kommende Bikomponenten-Polyolefinfaser besteht aus einem Polyolefinfaserkern mit hohem Schmelzpunkt (bevorzugt wird ein Polypropylenkern) und mit einem Fasermantel aus einem Polyolefin mit niedrigem Schmelzpunkt (bevorzugt wird ein Polyethylenmantel). Die dahingehende Faser hat ein Fasergewicht von 1,7 bis 6,7 dtex und eine Zugfestigkeit von 3,0 bis 4,0 cN/dtex. Die Elastizität bis zum Bruch beträgt regelmäßig 100-160 % und die Bikomponentenfaser ist als sogenannte Stapelfaser in den Längen von 3,4,6 und 12 mm erhältlich. Der Rohmaterialanteil an Polyethylen als Mantelteil hat einen Erweichungspunkt von 124° C und einen Schmelzpunkt von 130° C, wobei der Polypropylenanteil als Kernteil einen Erweichungspunkt bei 140° C hat und der Schmelzpunkt liegt bei 162° C.

Dahingehende Bikomponentenfasern lassen sich auf dem Markt bei diversen Herstellern erhalten. In Abhängigkeit der Filtrationsaufgabe besteht die Möglichkeit, dass Polyolefinmaterial variabel zu wählen ebenso die Schmelzpunkte des Polyolefinmaterials variabel vorzugeben. Als Faserkern können zentrale oder dezentrale Strukturen gewählt werden.

Die Einsatzmengen der genannten Bikomponentenfaser belaufen sich auf 1-80 Gewichts-%, wobei bevorzugt 0-50 Gewichts-% bezogen auf die Gesamtmasse der Filterschicht gewählt wird. Der Einsatz ist besonders bevorzugt in Verbindung mit nativen Fasern wie Zellulosefasern zu sehen. Wie noch anhand der Rezepturen näher erläutert werden wird, ist ein Einsatz mit und ohne anorganische Stoffe wie Kieselgur und Perlite möglich. Ferner bietet das erfindungsgemäße Filtermaterial die Möglichkeit, Filtermaterialien auf Basis von Kieselgur zu ersetzen. Eine Verbindung mit dem einschlägigen Nassfestmittel ist ohne weiteres möglich und aufgrund der Stabilität des gesamten Filtermaterials gegenüber Temperaturen ist ein Einsatz bei Temperaturen von 80-170° C ohne weiteres möglich, auch als teilweise oder vollständig schmelzende Faser.

Mit dem erfindungsgemäßen Filtermaterial ist die Erhöhung der Nassfestigkeit und Stabilität gegeben, sowie eine Erhöhung der chemischen Beständigkeit. Durch die Möglichkeit die Menge an Nassfestmittel einzustellen, kann eine Verringerung von MCPD (1,3-Monochlorpropandiol) und DCP (Dichlorpropanol) vorgenommen werden. In Abhängigkeit des Aufbaus und des eingesetzten Nassfestmittels läßt sich das Zetapotential variieren, insbesondere in anionischer oder kationischer Weise. Ferner ist eine Hydrophobisierung möglich sowie die Abtrennung unpolarer Substanzen, beispielsweise in Form sogenannter Lipide in Milchgetränken und dergleichen.

Des besseren Verständnisses wegen wird nunmehr das erfindungsgemäße Filtermaterial anhand verschiedener Rezepturen näher erläutert:

### Rezeptur 1:

Bikomponentenfaser in Verbindung mit Zellstoff ohne anorganischen Füllstoff und mit Nassfestmittel.
85 % Zellstoff,
15 % Bikomponentenfasern,
0,5 % Nassfestmittel.

Die Zusammensetzung der Rezeptur bezüglich Zellstoff, Bikomponentenfaser und Nassfestmittel ist variabel. Bei dieser Rezeptur ist der Zellstoff auf 30° SR gemahlen; es können aber auch Zellstoffmahlgrade von 15-70° SR gewählt werden. In Abhängigkeit vom Mahlgrad des Zellstoffes können mit dieser Rezeptur unterschiedliche Durchlässigkeiten und Festigkeiten der Tiefenfilterschicht erzielt werden. Ebenso führt ein variabler Anteil an der Bikomponentenfaser (1-50%) sowie des Nassfestmittels (0,1-2%) zu unterschiedlichen Nassfestigkeiten der Tiefenfilterschicht. Durch unterschiedliche Einsatzmengen von Nassfestmittel weisen mit dieser Rezeptur hergestellte Tiefenfilterschichten verschieden starke kationische Potentiale auf.

Wesentlicher Unterschied zwischen einer gemäß dieser Rezeptur hergestellten Tiefenfilterschicht und einer analogen bekannten Rezeptur ohne Bikomponentenfaser ist das Erreichen einer ausreichenden Nassfestigkeit bereits ohne Einsatz von Nassfestmittel, so daß in diesem Fall das Nassfestmittel nicht zur Erreichung der Nassfestigkeit eingesetzt zu werden braucht, sondern gezielt ausschließlich zur Erzielung des gewünschten kationischen Potentials verwendet wird.

### Rezeptur 2:

Bikomponentenfaser in Verbindung mit Zellstoff, mit Kieselgur und mit Nassfestmittel.
35 % Zellstoff,
15 % Bikomponentenfasern,
50 % anorganischer Füllstoff,
0,8 % Nassfestmittel.

Die Zusammensetzung der Rezeptur bezüglich Zellstoff, Bikomponentenfasern und anorganischem Füllstoff ist variabel. Bei dieser Rezeptur ist der Zellstoff auf 40° SR gemahlen; es können aber auch Zellstoffmahlgrade von 15-70° SR gewählt werden. In Abhängigkeit vom Mahlgrad des Zellstoffes können mit dieser Rezeptur unterschiedliche Durchlässigkeiten und Festigkeiten der Tiefenfilterschicht erzielt werden.

Ebenso führt ein variabler Anteil an Bikomponentenfasereintrag (1-50 %) bzw. Nassfestmittel (0,1-2 %) zu unterschiedlichen Nassfestigkeiten der Tiefenfilterschicht. Durch unterschiedliche Einsatzmengen von Nassfestmittel weisen mit dieser Rezeptur hergestellte Tiefenfilterschichten verschieden starke kationische Potentiale auf. Durch Art und Menge (5-70 %) sowie Permeabilität (0,010-5,0 Darcy) des eingesetzten anorganischen Füllstoffs, werden die Filtrationseigenschaften der Tiefenfilterschicht gezielt beeinflußt. Als Nassfestmittel dienen Epichlorhydrin-Harze und/oder Melaminformaldehyd-Harze.

Die gemäß den Rezepturen hergestellten Filtermaterialien lassen sich auch in Sonderbereichen für das Abscheiden von Mikroorganismen oder Proteinen sowie für eine Blutplasma-Fraktionierung einsetzen.

Das Herstellungsverfahren der Tiefenfilterschicht läuft wie folgt ab. Zur Stoffaufbereitung wird als Flachware angelieferter Zellstoff im sogenannten Pulper mit Wasser suspendiert. Diese Suspension (Pulpe) wird mittels eines sogenannten Entstippers (Faservereinzelung) und Refiners (Mahlung / Fibrillierung der Fasern) auf den gewünschten Mahlgrad eingestellt.

Die als Ballenware angelieferten Bikomponentenfasern werden im Pulper mit Wasser suspendiert und zur Zellstoffsuspension zugemischt.

Die Anlieferung des anorganischen Füllstoffs erfolgt vorzugsweise in Säcken und die einzusetzende Menge wird in Wasser suspendiert und anschließend zur Faserstoffmischung zugefügt, so dass eine homogene Mischung aus Faserstoff und anorganischem Füllstoff entsteht.

Das Nassfestmittel kann dieser Mischung zugegeben werden, beispielsweise durch direkte Zugabe zur Masse oder am Stoffauflauf dosiert werden (Dosage). Es ist auch möglich, mit beiden Varianten (Zugabe zur Masse und Dosage) zu arbeiten.

Die Blattbildung nebst Trocknung erfolgt dadurch, daß die Stoffmischung mittels Stoffauflauf auf ein Langsieb aufgebracht wird, wobei dann die Blattbildung der Tiefenfilterschicht erfolgt. Beim Lauf über die Langsiebpartie erfolgt die Entwässerung des gebildeten Blattes und im anschließenden Trockner wird die Tiefenfilterschicht zuerst vollständig getrocknet. Danach erfolgt die Auskondensation des Nassfestmittels sowie das Schmelzen des äußeren Mantels der Bikomponentenfaser, was man in der Fachsprache auch auf diesem Gebiet mit Sinterung bezeichnet. Abschließend ist das Filtermaterial dann ohne Schrumpfung mit einer-konstant vorgebbaren Filtermatrix erhalten.

## Patentansprüche

1. Filtermaterial, insbesondere in Form einer Tiefenfilterschicht, bestehend aus einer Durchlässe bildenden Stützschicht, mit einer ersten Art an Kunststoff-Fasern und mit einem vorgebbaren Anteil an nativen Fasern, wobei die erste Art an Fasern als Bikomponentenfasern ausgebildet ist, die einen Kern aufweisen mit einem hohen Schmelzpunkt, der von einem Mantel mit einem demgegenüber niedrigeren Schmelzpunkt umgeben ist, wobei im Filtermaterial ein Nassfestmittel vorhanden ist und das Nassfestmittel ausgewählt ist aus der Gruppe der Epichlorhydrin-Harze und/oder Melaminformaldehyd-Harze, **dadurch gekennzeichnet, dass** die erste Art an Fasern als Stapelfaser ausgebildet ist, mit vorgebbaren Längen von 3, 4, 6 und 12 mm.

2. Filtermaterial nach Anspruch 1, **dadurch gekennzeichnet, dass** der Kern aus Polyolefin- und/oder Polypropylenmaterial gebildet ist und dass der Mantel aus Polyethylenmaterial besteht.

3. Filtermaterial nach Anspruch 1 oder 2, **dadurch gekennzeichnet, dass** die nativen Fasern aus Zellstoffmaterial bestehen.

4. Filtermaterial nach einem der Ansprüche 1 bis 3, **dadurch gekennzeichnet, dass** diese zusätzliche
- anorganische Füllstoffe und/oder
- Kieselgur und/oder
- mindestens eine weitere Art an Kunststoff-Fasern
in vorgebbaren Mengenanteilen aufweist.

5. Verfahren zum Herstellen eines Filtermittels nach einem der Ansprüche 1 bis 4, **dadurch gekennzeichnet, dass** die nativen Fasern mit Wasser suspendiert werden, mit anschließender Faservereinzelung, dass die Fasern der ersten Art der dahingehenden Suspension zugesetzt werden und dass anschließend eine Entwässerung auf einer Siebpartie nebst Trocknung erfolgt.

## Claims

1. Filter material, especially in form of a deep filter layer, consisting of a protective layer forming passages, with a first type of synthetic fibre and with a predeterminable proportion of native fibres, whereby the first type of fibre takes the form of bicomponent fibre comprising a core with a high melting point, which is surrounded by a sleeve with a lower melting point, whereby a solid wet medium is provided in the filter material and the solid wet medium is selected from the group of epichlorine hydrine resins and/or melamine formaldehyde resins, **characterised in that** the first type of fibre takes the form of stacked fibres with predeterminable lengths of 3, 4, 6, and 12 mm.

2. Filter material according to Claim 1, **characterised in that** the core consists of polyolefin and/or polypropylene material, and that the sleeve consists of polyethylene material.

3. Filter material according to Claim 1 or 2, **characterised in that** the native fibres consist of cellulose.

4. Filter material according to one of the claims 1 to 3, **characterised in that** these further comprise
- anorganic fillers and/or
- silica and/or
- at least one further type of synthetic fibre
in predeterminable quantities.

5. Method for producing a filter means according to one of the Claims 1 to 4, **characterised in that** the native fibre is suspended with water, with subsequent fibre separation, and that the fibre of the first type is added to the said suspension, and that drainage as well as drying subsequently follows on a sieve section.

## Revendications

1. Matière filtrante, en particulier sous forme d'une couche d'un filtre à lit profond, constituée d'une couche-support formant des passages, ayant un premier type de fibres plastiques et une proportion pouvant être prédéfinie de fibres naturelles, le premier type de fibres étant constitué de fibres bicomposants, qui comprennent une âme ayant un point de fusion élevé, âme qui est entourée d'une gaine ayant un point de fusion plus bas que celui de l'âme, un agent de résistance à l'humidité étant présent dans la matière filtrante, et l'agent de résistance à l'humidité étant choisi dans le groupe des résines d'épichlorhydrine et/ou des résines de mélamine-formaldéhyde, **caractérisée en ce que** le premier type de fibres est sous forme de fibres coupées, ayant une longueur, pouvant être prédéfinie, de 3, 4, 6 et 12 mm.

2. Matière filtrante selon la revendication 1, **caractérisée en ce que** l'âme est en une matière de type polyoléfine et/ou polypropylène, et **en ce que** la gaine est en polyéthylène.

3. Matière filtrante selon la revendication 1 ou 2, **caractérisée en ce que** les fibres naturelles sont constituées d'une matière cellulosique.

4. Matière filtrante selon l'une des revendications 1 à 3, **caractérisée en ce qu'**elle comprend en outre, selon des proportions pondérales pouvant être prédéfinies,
- des matières de charge minérales et/ou
- du kieselguhr, et/ou
- au moins un autre type de fibres en matière plastique.

5. Procédé de fabrication d'une matière filtrante selon l'une des revendications 1 à 4, **caractérisé en ce qu'**on met les fibres naturelles en suspension dans de l'eau, puis on procède à une individualisation des fibres, que l'on ajoute les fibres du premier type à la suspension correspondante, puis que l'on procède à une déshydratation sur un tamis, ainsi qu'à un séchage.
